(19) **Europäisches Patentamt / European Patent Office / Office européen des brevets**

(11) **EP 1 707 954 B1**

(12) **EUROPÄISCHE PATENTSCHRIFT**

(45) Veröffentlichungstag und Bekanntmachung des Hinweises auf die Patenterteilung:
**07.05.2008 Patentblatt 2008/19**

(51) Int Cl.:
*G01N 27/416* (2006.01)  *G01N 27/49* (2006.01)

(21) Anmeldenummer: **05102599.7**

(22) Anmeldetag: **01.04.2005**

(54) **Verfahren und Vorrichtung zur Funktionskontrolle eines Sensors**

Method of controlling the functionality of a sensor and corresponding apparatus

Méthode et dispositif de contrôle de la fonctionnalité d'un capteur

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**04.10.2006 Patentblatt 2006/40**

(73) Patentinhaber: **Mettler-Toledo AG**
**8606 Greifensee (CH)**

(72) Erfinder: **Oberlin, René**
**5436, Würrenlos (CH)**

(56) Entgegenhaltungen:
**EP-A- 0 039 549**  **CH-A5- 636 447**
**DE-A1- 10 244 084**  **US-A- 5 202 637**
**US-A1- 2003 111 358**  **US-B1- 6 428 684**

**Beschreibung**

Die Erfindung betrifft ein Verfahren zur Funktionskontrolle eines amperometrischen elektro-chemischen Sensors.

Amperometrische elektro-chemische Sensoren werden in verschiedenen Bereichen zur Bestimmung des Partialdrucks und/oder der Konzentration von in Fluiden gelösten Gasen eingesetzt. Die Gase können sowohl in Flüssigkeiten als auch in Gasen gelöst sein. Es sind unter anderem Sensoren zur Bestimmung von Ozon, Chlor, Wasserstoff und Sauerstoff bekannt. Diese Sensoren werden in verschiedenen Bereichen wie der chemischen Industrie, der Lebensmittelindustrie und der Biotechnologie beispielsweise zur Überwachung von Prozessen oder auch zur Abwasseruntersuchung verwendet.

Das Messprinzip von amperometrischen elektro-chemischen Sensoren basiert auf der Bestimmung des elektrischen Stroms, welcher zwischen mindestens zwei Elektroden in einer elektro-chemischen Zelle unter Anlegung einer bestimmten Vorspannung oder Polarisations-Spannung fliesst. Häufig umfasst ein Sensor auch eine dünne gaspermeable Membran, welche das Messmedium und die elektro-chemische Zelle voneinander trennt und nur für bestimmte flüchtige oder gasförmige Substanzen, beispielsweise Sauerstoff, durchlässig ist. Es gibt aber auch Sensoren ohne eine derartige Membran.

Die elektro-chemische Zelle umfasst mindestens zwei Elektroden und eine Elektrolyt-Lösung in die die Elektroden eintauchen. Bei den Elektroden handelt es sich mindestens um eine Arbeitselektrode und einen Gegenelektrode. Zusätzlich kann noch eine Referenzelektrode vorhanden sein. Die Gegenelektrode wie auch die Referenzelektrode tauchen in eine ionenleitende Elektrolyt-Lösung ein, welche auch mit der Arbeitselektrode in Kontakt steht. Die Arbeitselektrode, wird durch geeignete Mittel bei einer bestimmten, im Vergleich zur Gegenelektrode häufig negativen Spannung betrieben, ist also als Kathode ausgebildet.

Bei einem amperometrischen elektro-chemischen Sensor mit einer für Sauerstoff permeablen Membran, also einem Sauerstoff-Sensor, diffundiert im Medium gelöster Sauerstoff durch die Membran hindurch zur Kathode. An der Kathode wird Sauerstoff elektro-chemisch nach der folgenden Reaktionsgleichung zu Wasser reduziert:

$$O_2 + 4\,H^+ + 4\,e \rightarrow 2\,H_2O$$

Als Gegenelektrode, meist Anode genannt, werden häufig Silber/Silberchlorid-Elektroden eingesetzt. An einer derartigen Gegenelektrode wird Silber zu Silberchlorid oxidiert, wie es die folgende Reaktionsgleichung beschreibt:

$$4\,Ag + 4\,Cl^- \rightarrow 4\,AgCl + 4\,e$$

Wird die elektro-chemische Zelle mit einer konstanten Spannung beaufschlagt, so fliesst aufgrund der chemischen Reaktionen an den Elektroden ein messbarer elektrischer Strom zwischen der Anode und der Kathode. Der gemessene Strom ist direkt proportional zum Partialdruck und damit auch zur Konzentration der im Medium gelösten Substanz, wenn der an der Kathode vorliegende Sauerstoff vollständig verbraucht wird und damit der Sauerstoff-Partialdruck an der Kathode gleich Null ist. Mit Ausnahme des Partialdrucks hängen fast alle Kenngrössen eines Sensors von der Temperatur ab, so dass alle Messwerte und Kenngrössen in Abhängigkeit der Temperatur angegeben oder auf eine Standardtemperatur zurückgeführt werden müssen. Die Messungen werden daher im Allgemeinen temperaturkompensiert durchgeführt, wobei die aktuelle Temperatur von mindestens einem Temperaturfühler erfasst wird.

Die Triebkraft für die Elektroden-Reaktionen ist die Sauerstoffdiffusion durch die gaspermeable Membran hindurch, welche durch die Partialdruckdifferenz an der Membran bestimmt wird. Der Sauerstofffluss wird ausschliesslich vom Partialdruck an der Membran gesteuert, wenn der an der Kathode vorhandene Sauerstoff vollständig reduziert wird.

Amperometrische elektro-chemische Sauerstoff-Sensoren werden im Allgemeinen spannungskontrolliert betrieben, wobei die angelegte Spannung als Polarisations-Spannung bezeichnet wird. In einem typischen Voltamogramm, einem Strom-Spannungs-Diagramm, für die Reduktion von gelöstem Sauerstoff steigt die Stromstärke mit abnehmender negativer Spannung zunächst bis zu einem Plateau an, ist dann für einen gewissen Spannungs-Bereich im Wesentlichen konstant und steigt bei weiterer Erniedrigung der Spannung weiter an.

Das Plateau im Voltamogramm kennzeichnet einen Spannungsbereich, in dem die Sauerstoff-Reduktion diffusionskontrolliert verläuft und der Partialdruck an der Kathode gleich Null ist.

Die Polarisations-Spannung des Sensors wird im Allgemeinen so gewählt, dass der Sauerstoff-Partialdruck im Inneren des Sensors bzw. an der Kathode gleich Null ist und der an der Kathode vorliegende Sauerstoff vollständig reduziert wird. Diese optimale Polarisations-Spannung sollte sich, bezogen auf ein typisches Voltamogramm, etwa in der Mitte des Plateaus befinden. In diesem Fall ist die gemessene Stromstärke spannungsunabhängig und direkt proportional zum Partialdruck und der Konzentration des im Medium gelösten Sauerstoffs.

Weicht die Polarisations-Spannung von der optimalen Polarisations-Spannung ab, das heisst liegt sie bezogen auf das Voltamogramm nicht mehr in der Mitte oder sogar ausserhalb des Plateaus, dann läuft eine der beiden Elektroden-Reaktionen bevorzugt ab. Eine zu niedrige Polarisations-Spannung bewirkt, dass weniger Sauerstoff zu Wasser reduziert wird, und eine zu hohe, dass sogar Wasser zu Wasserstoff reduziert wird. Eine von der optimalen Polarisations-Spannung abweichende Polarisations-Spannung führt also dazu, dass fehlerbehaftete Stromwerte gemessen werden.

Die optimale Polarisations-Spannung und damit auch die Form und Lage des Plateaus im Voltamogramm sind von verschiedenen Faktoren abhängig. Diese Faktoren, welche die Funktionsfähigkeit des Sensors beeinflussen, umfassen unter anderem die Temperatur, die Sensorgeometrie, das Alter des Sensors, sowie verschiedene Eigenschaften der im Sensor vorliegenden Elektrolyt-Lösung und des Messmediums, wie zum Beispiel den pH-Wert, die Sauerstoff-Konzentration, sowie das Vorhandensein von störenden Substanzen, wie Kohlendioxid oder anderen flüchtigen Komponenten, welche durch die Membran hindurch treten und an den Elektroden reagieren können.

Die unterschiedlichen Einsatzgebiete von amperometrischen elektro-chemischen Sensoren stellen hohe Anforderungen an die Funktionsfähigkeit eines Sensors. Zur Überprüfung der Funktionsfähigkeit von amperometrischen elektro-chemischen Sensoren sind verschiedene Verfahren bekannt.

Die DE 102 44 084 A1 offenbart ein Verfahren zur Überprüfung der Funktionsfähigkeit eines elektro-chemischen Sensors, insbesondere eines Leitfähigkeits-Sensors oder eines pH-Sensors. Es wird zeitweise eine Störgrösse auf den Sensor aufgeschaltet und die zeitliche Änderung des Sensorsignals beim Anlegen und/oder Entfernen der Störgrösse verfolgt. Diese zeitliche Änderung wird dann als Mass für Veränderungen verschiedener Sensorkenngrössen herangezogen. Als Störgrösse wird hier eine externe Hilfs-Spannung verwendet oder im Falle eines pH-Sensors werden einfach die Mess- und Bezugselektrode kurzgeschlossen.

Bezogen auf einen amperometrischen elektro-chemischen Sauerstoff-Sensor hat dieses Verfahren den Nachteil, dass eine Störgrösse, wie beispielsweise eine Spannungs-Varianz, relativ gross sein muss, um eine zeitliche Abhängigkeit des Sensorsignals verfolgen zu können. Die Spannungsvarianz muss ausreichen, um das chemische System aus dem Gleichgewicht zu bringen, und sollte daher ausserhalb des Plateaus im Voltamogramm liegen. Die Zeit bis sich das chemische Gleichgewicht wieder einstellt, bzw. bis der Partialdruck an der Kathode wieder gleich Null ist, ist relativ lang und könnte die Messwertaufnahmen beeinflussen, welche während eines chemischen Prozesses häufig mit sehr kurzen Zeitabständen erfolgen. Kurzfristig auftretende Veränderungen des Messsystems oder des Mediums können während der Überprüfung des Sensors nicht erfasst werden.

In der US 6,761,817 B2 wird ein Verfahren zur Bestimmung der Polarisations-Spannung eines Sauerstoff-Sensors offenbart. Ein einen normalerweise spannungskontrolliert betriebenen Sensor umfassendes Messsystem wird derart verändert und umgebaut, dass der Sensor sowohl spannungs- als auch stromkontrolliert betrieben werden kann. Für eine Überprüfung der Polarisations-Spannung wird der Sensor in einen stromkontrollierten Modus umgeschaltet und die Spannungs-Antworten bei einem im Vergleich zum Anfangswert erhöhten und einem im Vergleich zum Anfangswert erniedrigten Strom-Level gemessen. Die Spannungs-Antwort entspricht hier dem bei einer bestimmten voreingestellten Stromstärke ermittelten Spannungs-Messwert. Die Abweichungen vom Anfangsstrom sind dabei fest vorgegeben und es werden die Spannungs-Antworten bei diesen zwei konstanten Strom-Leveln ermittelt. Die optimale Polarisations-Spannung entspricht dann in etwa dem Mittel, angegeben sind 56 %, der beiden Spannungs-Werte.

Dieses für die Bestimmung der optimalen Polarisations-Spannung verwendete 56 %-Prinzip muss empirisch ermittelt werden und ist sowohl von der Sensorgeometrie als auch von der Sauerstoff-Konzentration im Medium abhängig. Das bedeutet, dass die optimale Polarisations-Spannung nur dann bestimmt werden kann, wenn das Medium und/oder das Messsystem sich während der Ermittlung nicht verändern.

Die vorgegebenen Strom-Level werden so gewählt, dass sie in Bereichen liegen, welche die Grenzen der Sauerstoffelektrochemie bilden. Der Sensor wird für dieses Verfahren also bei Strom-Leveln betrieben, welche bezogen auf ein typisches Voltamogramm ausserhalb des Plateaus liegen. Dies führt allerdings dazu, dass das chemische Gleichgewicht beispielsweise durch die Entstehung von Wasserstoff bei der Reduktion von Wasser gestört werden kann, wodurch sich die Einstellung des chemischen Gleichgewichts nach der Bestimmung der Polarisations-Spannung verzögert. Im Anschluss an die Bestimmung der Polarisations-Spannung wird der Sensor wieder in den spannungskontrollierten Modus umgestellt und die neue, semiempirisch bestimmte Polarisations-Spannung eingestellt. Je nachdem wie stark der Sensor gestört wurde, muss eine längere Wartezeit für die Bestimmung stabiler Messwerte berücksichtigt werden.

Gerade in sensiblen Bereichen, wie der Lebensmittelindustrie und/oder der Biotechnologie ist es jedoch extrem wichtig, Veränderungen des Mediums laufend zu verfolgen. Bereits geringe Änderungen oder Schwankungen der Konzentration können bei sensiblen Prozessen bereits das Produkt beeinflussen.

Damit ergibt sich als Aufgabe die Entwicklung eines Verfahrens und eines Messsystems zur Überwachung der Funktionsfähigkeit eines amperometrischen elektro-chemischen Sensors, welches schnell durchführbar, unabhängig von der Zusammensetzung des Medium ist und auch bei Prozessen mit veränderlicher Zusammensetzung des Mediums angewendet werden kann.

Gelöst wird diese Aufgabe durch ein Verfahren und ein Messsystem nach den unabhängigen Ansprüchen 1 und 9.

Ein Verfahren zur Funktionskontrolle eines amperometrischen elektro-chemischen Sensors mit einer elektro-chemischen Zelle umfasst die folgenden Schritte. Auf die elektro-chemische Zelle, welche mit einer anfänglich konstanten Polarisations-Spannung spannungskontrolliert betrieben wird, wird eine Störgrösse aufgebracht. Die Antwort, also das Messsignal oder der Messwert, der derart gestörten elektro-chemischen Zelle wird erfasst und ein Kontrollwert unter Einbeziehung der Antwort der gestörten elektro-chemischen Zelle hergeleitet. Dieser Kontrollwert wird mit einem systemabhängigen oder system-spezifischen Grenzwert verglichen und die Polarisationsspannung entweder verifiziert oder verändert. Wenn der Kontrollwert kleiner oder gleich dem systemabhängigen Grenzwert ist, so handelt es sich bei der anfänglichen Polarisations-Spannung bereits um die optimale Polarisations-Spannung. Ist der Kontrollwert jedoch grösser als der systemabhängige Grenzwert, so wird die anfängliche Polarisations-Spannung um ein vordefiniertes Spannungs-Inkrement verändert. Diese Schritte werden mit der veränderten Polarisations-Spannung bis zur Ermittlung einer optimalen Polarisations-Spannung wiederholt, also bis der ermittelte Kontrollwert kleiner als der systemabhängige Grenzwert ist.

Amperometrische elektro-chemische Sensoren werden im Allgemeinen spannungskontrolliert betrieben. Es bietet sich daher an, als Störgrösse einen Spannungsimpuls zu verwenden, da dann das Messsystem für die Funktionskontrolle nicht zwischen verschiedenen Betriebsarten umgeschaltet werden muss. Das Messsystem selbst benötigt zur Durchführung des Verfahrens nur geringfügige Änderungen.

Der verwendete Spannungsimpuls kann verschiedene Formen und Längen aufweisen. Es kann beispielsweise ein Rechteckimpuls, ein Dreieckimpuls, ein Sinusimpuls oder ein Gaussimpuls verwendet werden. Als Gaussimpuls wird hier ein Impuls bezeichnet, welcher die Form der Gauss'schen Glockenkurve aufweist. Die impulslänge kann den Einsatzbedingungen des Sensors angepasst werden und liegt im Allgemeinen zwischen 1 und 60 s. Die Amplitude des Störimpulses liegt zwischen etwa 1 und etwa 100 mV. Die Verwendung von kleinen Amplituden ist vorteilhaft, da der Sensor geringe Störungen schneller kompensieren kann als grössere, d. h. der Sensor liefert nach einer Störung mit einer geringeren Amplitude rascher wieder konstante Messwerte.

Der von einem amperometrischen elektro-chemischen Sensor erfasste Messwert oder die erfasste Antwort ist eine Stromstärke, deren Grösse proportional zum Partialdruck und/oder der Konzentration der im Medium gelösten Substanz ist.

Wenn die aktuelle Polarisations-Spannung nicht mit der optimalen Polarisations-Spannung übereinstimmt, wird das chemische System durch den Störimpuls beeinflusst und kann aus dem Gleichgewicht gebracht werden. Es hat sich gezeigt, dass es möglich ist, eine Kontrollfunktion aufzustellen, welche einen linearen oder nicht-linearen mathematischen Zusammenhang zwischen der Antwort des gestörten Systems und der Antwort des ungestörten Systems darstellt. Die Antwort des Systems ist im einfachsten Fall der für eine bestimmte Polarisationsspannung bei einer bestimmten Sauerstoffkonzentration ermittelte Stromwert. Es ist auch denkbar, dass eine zeitliche Abhängigkeit beispielsweise zwischen dem Störimpuls und der Systemantwort oder der Dauer bis sich das System wieder im Gleichgewicht befindet miteinbezogen wird. Für einen bestimmten Störimpuls kann anhand dieser Kontrollfunktion ein Kontrollwert berechnet werden. Die Kontrollfunktion hängt zumindest vom verwendeten Sensor-Typ, dem zu untersuchenden Medium und der Konzentration der zu untersuchenden Substanz im Medium ab.

Der berechnete Kontrollwert wird mit einem Grenzwert verglichen, welcher ein Mass für die Funktionsfähigkeit und die Messgenauigkeit des Sensors darstellt. Der Grenzwert ist ebenfalls systemabhängig und wird so festgelegt, dass der Sensor bei Einhaltung des Grenzwerts noch innerhalb der vorgegebenen Messgenauigkeit misst.

Der Grenzwert hängt daher von verschiedenen Faktoren ab, zu denen die Temperatur, der verwendete Sensor und auch dessen Sensor-Geometrie sowie die Konzentration bzw. der Partialdruck der gesuchten Substanz im Medium gehören.

Sowohl die Kontrollfunktion als auch der Grenzwert müssen für jeden Sensor-Typ individuell ermittelt werden, was bevorzugt auf empirischem Wege geschieht. Nach der Ermittlung der Kontrollfunktion für einen bestimmten Sensortyp kann die Funktion beispielsweise in einer Datenbank und/oder einer Auswertungseinheit abgelegt werden, auf die das Verfahren zugreifen kann.

Das Verfahren zur Funktionskontrolle eines amperometrischen elektro-chemischen Sensors wird in vorbestimmten Zeitintervallen wiederholt, um zu überprüfen, ob und in wie weit sich das System von seiner optimalen Einstellung entfernt hat. Die Zeitintervalle für die Wiederholung des Verfahrens liegen zwischen wenigen Minuten und mehreren Stunden oder Tagen und vorzugsweise zwischen etwa 5 min und 24 h. Idealerweise wird das Verfahren mindestens einmal pro Messtag durchgeführt.

Wird bei der Funktionskontrolle festgestellt, dass die aktuelle Polarisations-Spannung von der optimalen Polarisations-Spannung abweicht, so wird die aktuelle Polarisations-Spannung schrittweise verändert und nach jeder Anpassung neu dem Verfahren zur Funktionskontrolle unterworfen. Die Änderung der Polarisations-Spannung findet in vorbestimmten Spannungs-Inkrementen statt, welche in Abhängigkeit des Sensors und des Mediums dem Benutzer vorgegeben werden. Die Spannungs-Inkremente weisen eine Grösse zwischen 5 und 1000 mV und vorzugsweise zwischen 10 und 150 mV auf.

Die Strom-Antwort des Sensors hängt von der Temperatur ab, so dass sowohl das Verfahren zur Funktionskontrolle des Sensors, als auch die Messwert-Bestimmung bevorzugt temperaturkompensiert durchgeführt werden. Die Temperaturkompensation wird normalerweise anhand der aktuellen Temperatur des Mediums durchgeführt, in dem der Messwert oder die Strom-Antwort auf eine Standardtemperatur zurückgeführt wird. Dies ist notwendig, da die Löslichkeit eines Stoffes von der Temperatur abhängt und diese die Konzentration des Stoffes in der Lösung beeinflusst.

Die Temperatur des Mediums wird vorzugsweise mittels mindestens eines geeigneten Temperaturfühlers ermittelt.

Das Verfahren zur Funktionskontrolle kann mit einem geeigneten Messsystem auch automatisiert durchgeführt werden, so dass es beispielsweise in Testroutinen und/oder Prozessüberwachungen integriert werden kann.

Ein Messsystem zur Durchführung des beschriebenen Verfahrens umfasst mindestens einen amperometrischen elektro-chemischen Sensor mit mindestens einer Arbeitselektrode und einer Gegenelektrode, eine veränderbare Spannungsquelle zur Erzeugung der Polarisations-Spannung und der Störimpulse, eine Strommesseinrichtung zur Erfassung der Messwerte und eine computergestützte Steuer- und Auswertungseinheit.

In die computergestützte Steuer- und Auswertungseinheit ist das Verfahren zur Funktionskontrolle über ein entsprechendes Programm implementiert. Das Verfahren sowie auch normale Messungen können mittels der Steuer- und Auswertungseinheit ausgeführt werden.

Weiterhin umfasst die computergestützte Steuer- und Auswertungseinheit einen Datenspeicher, in dem die systemabhängigen Parameter für unterschiedliche Substanzen, Konzentrationen und Sensor-Typen abgelegt sind. Diese Parameter umfassen zumindest die Werte für die vorbestimmten Inkremente, die systemabhängigen Grenzwerte, die Störimpulse und die anfängliche Polarisations-Spannung sowie die systemabhängigen Kontrollfunktionen und die zugehörigen Temperaturdaten, welche zum Abgleich der Messwerte mit den Parametern benötigt werden.

Die Auswertungseinheit umfasst weiterhin einen Monitor und/oder einen Lautsprecher, so dass beim Erreichen der Abbruchbedingung ein optisches, elektrisches und/oder akustisches Signal erzeugt werden kann. Dieses Signal zeigt dem Benutzer an, dass eine weitere manuelle Überprüfung des Messsystems erfolgen sollte, welche dann auch Rückschlüsse auf Änderungen im Medium ermöglichen kann.

Eine elektrochemische Zelle kann neben einer Arbeits- und einer Gegenelektrode auch noch eine Referenzelektrode umfassen.

Der amperometrische elektro-chemische Sensor kann eine gaspermeable Membran aufweisen, welche vorzugsweise permeabel für Sauerstoff ist. Eine derartige Membran erhöht die Sensitivität des Sensors.

Das Verfahren zur Funktionskontrolle eines amperometrischen elektro-chemischen Sensors wird anhand eines Flussdiagramms und eines bevorzugten Ausführungsbeispiels mit Hilfe der folgenden Figuren erläutert. Die Figuren zeigen:

Fig. 1     eine schematische Darstellung eines Verfahrens zur Funktionskontrolle eines Sensors in Form eines Flussdiagramms, die Zahlen 1 bis 4 in den Kreisen zeigen dabei den weiteren Verlauf des Flussdiagramms an;

Fig. 2     eine Schaltskizze eines Messsystems mit einem Sauerstoff-Sensor;

Fig. 3     einen zeitlichen Verlauf der Stromstärke für einen in Luft betriebenen InPro6800 Sauerstoff-Sensor;

Fig. 4     einen zeitlichen Verlauf der Stromstärke für einen InPro6800 Sauerstoff-Sensor betrieben in reinem Sauerstoff.

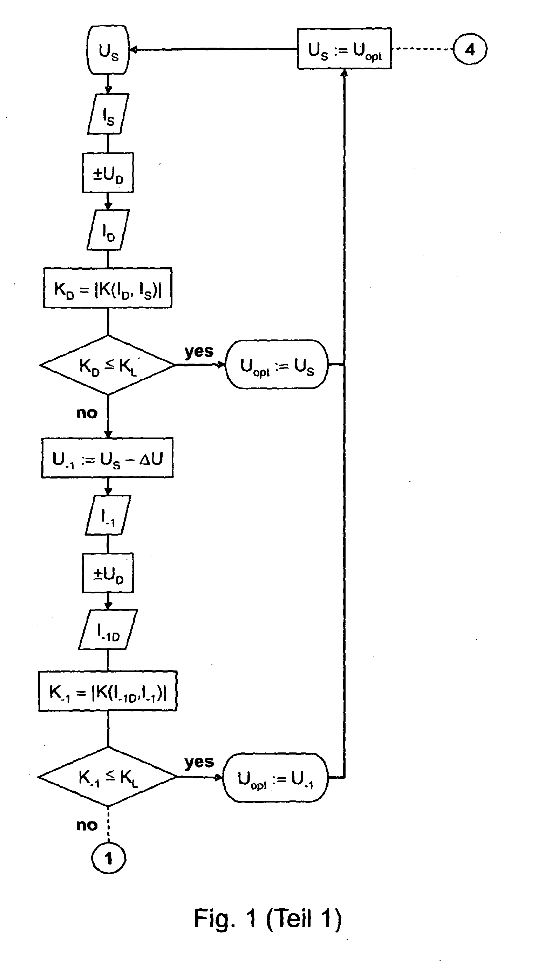

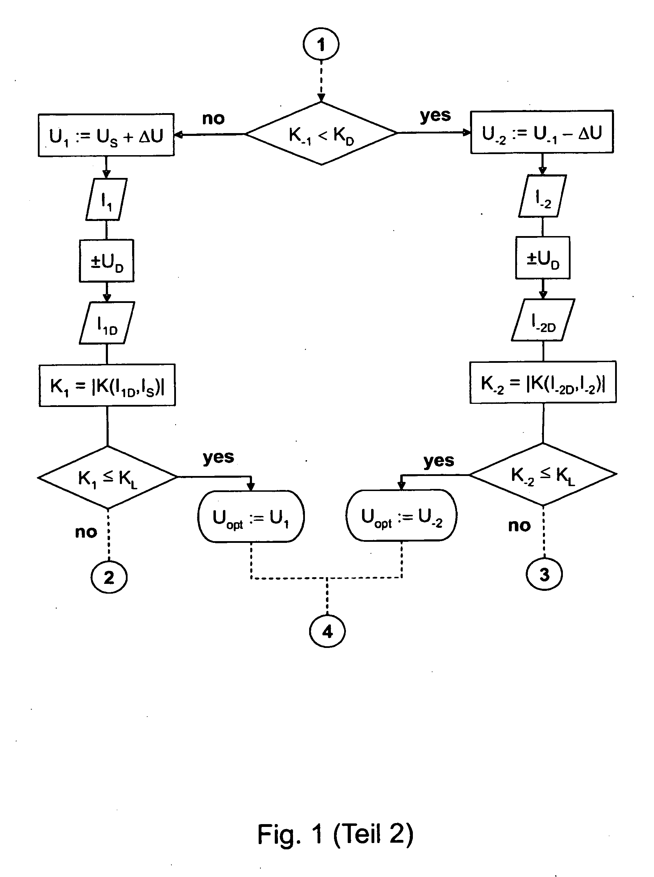

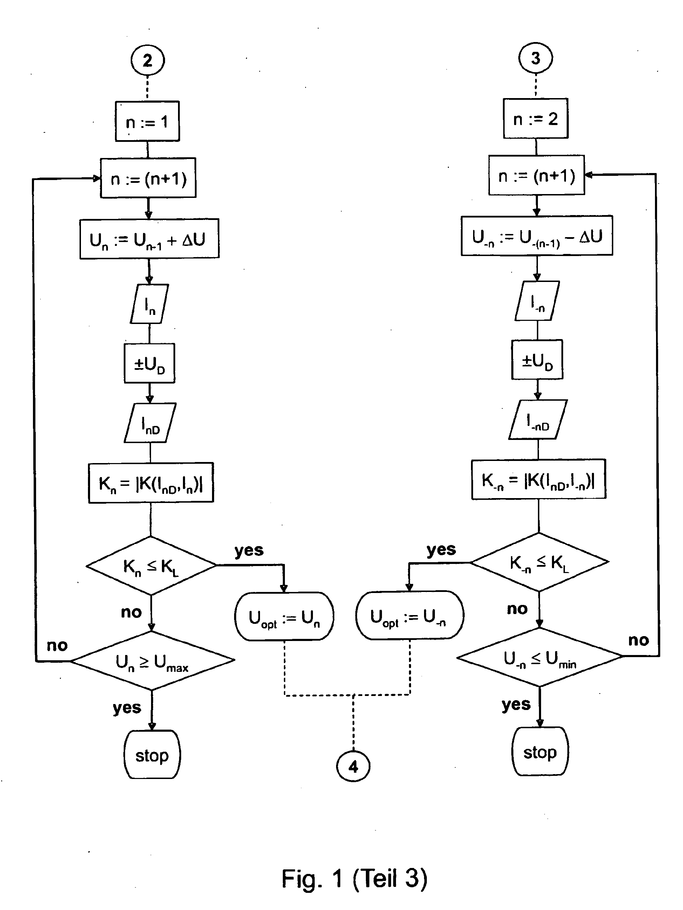

Figur 1 zeigt schematisch den Verfahrensablauf für die Funktionskontrolle eines amperometrischen elektro-chemischen Sensors in Form eines Flussdiagramms. Ein amperometrischer elektro-chemischer Sensor wird spannungskontrolliert bei einer bestimmten Anfangs-Polarisations-Spannung $U_S$ betrieben. Gemessen wird die mit $U_S$ korrespondierende Anfangsstromstärke $I_S$, welche sich aufgrund von chemischen Reaktionen in der elektro-chemischen Zelle des Sensors ergibt.

Zur Überprüfung der Funktionsfähigkeit des Sensors wird mindestens ein Störimpuls $\pm U_D$ aufgeschaltet, welcher vorzugsweise einer Stör-Spannung entspricht. Im Allgemeinen werden Störimpulse $\pm U_D$ mit einem Spannungswert von zwischen $\pm 10$ bis etwa $\pm 50$ mV verwendet, wobei der Störimpuls $\pm U_D$ in Bezug auf die Anfangs-Polarisations-Spannung $U_S$ negativ und/oder positiv sein kann. Für das Verfahren bedeutet dies, dass der Sensor entweder mit mindestens einem einzelnen positiven oder negativen Störimpuls oder zuerst mit mindestens einem positiven oder negativen Störimpuls und anschliessend mit mindestens einem negativen oder positiven Störimpuls gestört werden kann. Die Amplitude von $\pm U_D$ wird in Abhängigkeit des Sensors und des Mediums gewählt. Der Störimpuls $\pm U_D$ kann verschiedene Impulsformen aufweisen, wie einen Rechteckimpuls, einen Dreiecksimpuls, einen Sinuspuls oder einen Gaussimpuls, wobei ein Rechteckimpuls bevorzugt wird. Die Pulslänge des Störimpulses $\pm U_D$ liegt dabei vorzugsweise zwischen etwa 5 und 60 s.

Das Medium in der elektro-chemischen Zelle des Sensors reagiert auf die Störung $\pm U_D$ und es kann eine mit der Störung $\pm U_D$ korrespondierende Stromstärke $I_D$ gemessen werden.

Zwischen der Sensor-Antwort $I_D$ des gestörten Systems und der Sensor-Antwort des ungestörten Systems $I_S$

besteht ein mathematischer Zusammenhang, welcher über die im Idealfall lineare Kontrollfunktion K ausgedrückt wird. Die beiden Grössen $I_D$ und $I_S$ können allerdings auch über eine nicht-lineare Funktion K miteinander verknüpft sein. Für eine einzelne Antwort $I_S$ und eine einzelne Antwort $I_D$ wird aufgrund des mathematischen Zusammenhangs ein Kontrollwert $K_D = |K(I_D, I_S)|$ berechnet.

Die Kontrollfunktion K kann verschiedene mathematische Verknüpfungen zwischen der Antwort des ungestörten und des gestörten Systems umfassen, wie einen Quotienten, eine Differenz, eine Summe oder ein Produkt der Antworten, oder auch einen linearen, nicht-linearen, polynomen oder exponentiellen Zusammenhang. K kann auch mit der Antwort des gestörten Systems gleichgesetzt sein. Weiterhin kann die Kontrollfunktion auch den zeitlichen Zusammenhang zwischen dem Störimpuls $\pm U_D$ und der Strom-Antwort umfassen. Der Kontrollwert $K_D$ ist der Betrag des Werts der für einen bestimmten Sensor und eine bestimmte Substanz-Konzentration ermittelten Kontrollfunktion K für eine Antwort des gestörten Sensors und eine Antwort des ungestörten Sensors. Der Kontrollwert $K_D$ kann auch mittels der Kontrollfunktion K anhand von einem einzelnen Antwort-Paar oder auch anhand eines Mittelswerts mehrerer Messwerte und/oder des zeitlichen Verhaltens der Werte zu einander berechnet werden.

In einem weiteren Schritt wird dieser Kontrollwert $K_D$ mit einem systemabhängigen Grenzwert $K_L$ verglichen. Dieser Grenzwert $K_L$ ist ein Mass dafür, wie weit die Polarisations-Spannung des Sensors von einer optimalen Polarisations-Spannung abweichen kann und der Sensor trotzdem noch innerhalb seiner Messunsicherheit funktioniert bzw. keinen relevanten Messfehler verursacht. $K_L$ ist sowohl von der Geometrie des verwendeten Sensors, der Temperatur, als auch von der Konzentration bzw. dem Partialdruck der zu untersuchenden Substanz im Medium abhängig. Im Fall einer computergestützten Auswertung bietet es sich an, $K_L$ für verschiedene Sensor-Typen, Substanz-Konzentrationen und Temperaturen in einer Datenbank zu hinterlegen, auf die ein Auswertungsprogramm und/oder eine Auswertungseinheit zugreifen können. $K_L$ wird bevorzugt empirisch ermittelt, wobei gegebenenfalls auch vom Anwender spezifizierte Genauigkeits-Anforderungen miteinbezogen werden können.

Ist der Kontrollwert des gestörten Systems $K_D$ kleiner oder gleich dem Grenzwert $K_L$, so arbeitet der Sensor innerhalb der vorgegebenen Grenzen korrekt und die eingestellte Polarisations-Spannung $U_S$ entspricht der optimalen Polarisations-Spannung $U_{opt}$. Bezug nehmend auf die elektro-chemische Zelle, bedeutet dies, dass der Partialdruck an der Kathode gleich Null ist.

Zur ständigen Funktionskontrolle des Sensors, wird das Verfahren in vorbestimmten Zeitintervallen wiederholt, wie es durch die Verbindung zwischen $U_S := U_{opt}$ und $U_S$ angedeutet ist. Die ständige Kontrolle in vorbestimmten Zeitintervallen dient dazu, das System über einen längeren Zeitraum hinweg zu überwachen und die Polarisations-Spannung ständig zu kontrollieren und gegebenenfalls anzupassen.

Ist der Kontrollwert des gestörten Systems $K_D$ jedoch grösser als der Grenzwert $K_L$, deutet dieses darauf hin, dass die Polarisations-Spannung $U_S$ angepasst werden muss. Am Sensor wird eine neue Polarisations-Spannung $U_{-1} := U_S - \Delta U$ eingestellt, welche der um ein vordefiniertes Spannungs-Inkrement $\Delta U$ erniedrigten Anfangs-Polarisations-Spannung $U_S$ entspricht. Die Grösse des Spannungs-Inkrements $\Delta U$ wird in Abhängigkeit des verwendeten Sensors und der Substanz-Konzentration im Medium gewählt. $\Delta U$ kann Werte zwischen etwa 5 und 1000 mV annehmen, wobei Werte zwischen 10 und 150 mV bevorzugt werden.

Am Sensor wird eine neue Polarisations-Spannung $U_{-1}$ eingestellt, welche eine neue Strom-Antwort $I_{-1}$ liefert. Der so eingestellte Sensor wird wieder durch mindestens einen aufgebrachten Spannungsimpuls $\pm U_D$ gestört und das Antwortsignal $I_{-1D}$ des gestörten Sensors gemessen. Anhand der Antwort $I_{-1}$ und der Antwort $I_{-1D}$ wird ein neuer Kontrollwert $K_{-1} = |K(I_{-1D}, I_{-1})|$ berechnet.

Dieser Kontrollwert $K_{-1}$ wird wiederum mit dem Grenzwert $K_L$ verglichen. Ist $K_{-1}$ kleiner oder gleich dem Grenzwert $K_L$, so wurde die Anfangs-Polarisations-Spannung $U_s$ in Richtung der optimalen Polarisations-Spannung $U_{opt}$ verschoben und $U_{-1}$ entspricht der optimalen Polarisations-Spannung $U_{opt}$. Die optimale Polarisations-Spannung $U_{opt}$ wird am Sensor eingestellt und für die weiteren Messwertaufnahmen verwendet. $U_{opt}$ wird also zu $U_S$. Das Verfahren wird dann in vorbestimmten Zeiträumen wiederholt, um das System ständig zu kontrollieren und anzupassen.

Ist $K_{-1}$ hingegen immer noch grösser als der Grenzwert $K_L$, so wird nun in einem weiteren Schritt $K_{-1}$ mit $K_D$ verglichen.

Ist $K_{-1}$ kleiner als $K_D$, so wurde die Anfangs-Polarisations-Spannung $U_S$ zwar in die richtige Richtung korrigiert, aber nicht stark genug. Weder die Anfangs-Polarisations-Spannung $U_S$ noch die erste korrigierte Polarisations-Spannung $U_{-1}$ entsprechen der optimalen Polarisations-Spannung $U_{opt}$. Die Polarisations-Spannung $U_{-1}$ muss daher um ein weiteres Spannungs-Inkrement $\Delta U$ erniedrigt werden und es ergibt sich eine neue Polarisations-Spannung $U_{-2} := U_{-1} - \Delta U$.

Die neue Polarisations-Spannung $U_{-2}$ wird eingestellt und die Stromstärke $I_{-2}$ gemessen. Anschliessend wird der Sensor wiederum durch mindestens einen Störimpuls $\pm U_D$ gestört, seine Antwort $I_{-2D}$ gemessen, ein neuer Kontrollwert $K_{-2}$ ermittelt und mit dem Grenzwert $K_L$ verglichen. Ist $K_{-2}$ immer noch grösser als $K_L$, so wird die Polarisations-Spannung um ein weiteres Spannungs-Inkrement erniedrigt $U_{-n} := U_{-(n-1)} - \Delta U$ mit ganzzahligem $n := n+1; n \geq 2$.

Die neue Polarisations-Spannung $U_{-n}$ wird eingestellt, die Strom-Antwort $I_{-n}$ gemessen, der Sensor wieder gestört, die Antwort $I_{-nD}$ des gestörten Systems gemessen, der Kontrollwert $K_{-n}$ ermittelt und mit dem Grenzwert $K_L$ verglichen. Dieser Prozess wird so lange fortgesetzt, bis $K_{-n} \leq K_L$ erreicht wird und die Funktionskontrolle mit dem Einstellen der optimalen Polarisationsspannung beendet werden kann.

Ist $K_{-1}$ hingegen grösser als $K_L$ und grösser als $K_D$, so bedeutet dieses, dass die Anfangs-Polarisations-Spannung $U_S$ in die falsche Richtung korrigiert wurde. Um dieses zu testen, wird eine neue Polarisations-Spannung $U_1 :=$ $U_S + \Delta U$ eingestellt, welche der Anfangs-Polarisations-Spannung $U_S$ zuzüglich eines Spannungs-Inkrements $\Delta U$ entspricht, und die zugehörige Stromstärke $I_1$ gemessen. Anschliessend wird ein Störimpuls $\pm U_D$ aufgebracht und die Strom-Antwort $I_{1D}$ erfasst, ein Kontrollwert $K_1$ in Abhängigkeit von $I_{1D}$ und $I_S$ berechnet und mit dem system-spezifischen Grenzwert $K_L$ verglichen. Wenn $K_1$ kleiner oder gleich $K_L$ ist, so entspricht die neue Polarisations-Spannung $U_1$ der optimalen Polarisations-Spannung und wird für die nachfolgen Messungen eingestellt und verwendet.

Wenn $K_1$ jedoch grösser als $K_L$ ist, so wird die Polarisations-Spannung $U_1$ nochmals um ein Spannungs-Inkrement $\Delta U$ erhöht ($U_n := U_{n-1} + \Delta U$ mit ganzzahligem n := (n+1); n ≥ 1). Die Antwort $I_n$ des Systems auf die neue Polarisations-Spannung $U_n$ wird erfasst, der Sensor mit einem Störimpuls $\pm U_D$ beaufschlagt, die Stromstärke $I_{nD}$ erfasst und ein von $I_{nD}$ und $I_n$ abhängiger Kontrollwert $K_n$ berechnet und mit dem Grenzwert $K_L$ verglichen.

Die Schritte Einstellung einer neuen Polarisations-Spannung $U_n$ oder $U_{-n}$, Bestimmung der Strom-Antwort $I_n$, $I_{-n}$, Aufbringen eines Störimpulses $\pm U_D$, Messung der Antwort des gestörten Systems $I_{nD}$, $I_{-nD}$, Ermittlung eines Kontrollwerts $K_n = |K(I_{nD},I_n)|$, $K_{-n} = |K(I_{-nD},I_{-n})|$ und Vergleich des Kontrollwerts $K_n$, $K_{-n}$ mit dem system-spezifischen Grenzwert $K_L$, werden nun wiederholt bis der Kontrollwert $K_n$, $K_{-n}$ kleiner oder gleich dem Grenzwert $K_L$ ist. Die Schritte werden allerdings nicht endlos oft wiederholt, sondern nur solange sich die eingestellte Polarisations-Spannung $U_n$, $U_{-n}$ innerhalb eines vorgegebenen Spannungs-Bereichs, also zwischen $U_{max}$ und $U_{min}$ befindet. Diese beiden Werte $U_{max}$, $U_{min}$ sind sensor-spezifisch und zeigen den Spannungs-bereich an, in dem ein bestimmter Sensor prinzipiell betrieben werden kann bzw. sollte. Liegt die aktuelle Polarisations-Spannung $U_n$, $U_{-n}$ ausserhalb des vorgegebenen Spannungs-Bereichs, so wird das Verfahren angehalten und der Anwender über ein akustisches, elektrisches und/oder optisches Signal informiert.

Werden die Schritte ohne Ermittlung einer optimalen Polarisations-Spannung $U_{opt}$ bis zum Erreichen der Abbruchbedingung $U_n \geq U_{max}$ oder $U_{-n} \leq U_{min}$ wiederholt, so deutet dieses darauf hin, dass zumindest ein Teil des Messsystems kontrolliert oder gewartet werden muss. Starke Abweichungen können darauf hindeuten, dass beispielsweise der Sensor oder die Membran ausgetauscht oder der Sensor mit neuer Elektrolyt-Lösung gefüllt werden muss. Veränderungen im Medium, wie plötzliche pH-Änderungen oder eine Änderung der Zusammensetzung sind ebenfalls möglich, treten aber in der Regel eher selten auf.

Das Erreichen der Abbruchbedingung wird dem Benutzer durch eine akustische, elektrische und/oder optische Meldung einer computergestützten Auswertungseinheit angezeigt. Es ist auch denkbar, dass diese Meldung als Störungsmeldung elektrisch oder elektronisch direkt an eine Prozess-Steuereinheit gemeldet wird und der Prozess angepasst oder angehalten wird.

Das in Figur 1 dargestellte Verfahren kann auch zur ständigen, automatisierten Funktionskontrolle eines beliebigen amperometrischen elektro-chemischen Sensors verwendet werden, beispielsweise während der Durchführung eines chemischen Prozesses.

Dafür wird das oben beschriebene Verfahren für die ermittelte Polarisations-Spannung in vorbestimmten Zeitintervallen wiederholt. Diese Zeitintervalle liegen zwischen etwa 5 min und 24 h, wobei ein Zeitintervall von etwa 30 min bevorzugt wird. Idealerweise wird die Funktionskontrollen zwischen zwei Messwert-Aufnahmen durchgeführt, damit keine Lücken in den Messwertreihen entstehen, wobei es auch möglich wäre, die Frequenz der Messwertaufnahme mit der Abweichung der optimalen Polarisations-Spannung von der Anfangs-Polarisations-Spannung zu korrelieren. Ist die Abweichung zwischen $U_S$ und $U_{opt}$ beispielsweise relativ gross, so sollten häufiger Messwerte aufgenommen werden, um den Prozess genauer kontrollieren zu können.

In der Praxis sollte die Funktionsfähigkeit eines amperometrischen elektro-chemischen Sensors vor dem Beginn oder Start eines Prozesses sehr genau überprüft werden, vor allem da eine gute Kalibration nur bei der optimalen Polarisationsspannung durchgeführt werden kann. Eine Wiederholung in festgelegten Zeitabständen kann auch zur Bestätigung der ermittelten optimalen Polarisations-Spannung genutzt werden, indem das Messsystem in regelmässigen Zeitabständen kontrolliert wird. Weiterhin ermöglichen mehrere kurz auf einander folgende Wiederholungen, die Ermittlung eines Mittelwerts der optimalen Polarisations-Spannung aus mehreren aufeinander folgenden Störzyklen, so dass der Einfluss kurzzeitiger Schwankungen des Messsystems und/oder der Zusammensetzung des Mediums auf die zu ermittelnde optimale Polarisations-Spannung vermindert wird.

Es ist selbstverständlich auch möglich, mehr als einen Störimpuls $\pm U_D$, beispielsweise eine bestimmte Anzahl negativer und/oder positiver Störimpulse gefolgt von einer bestimmten Anzahl positiver und/oder negativer Störimpulse oder positive und negative Störimpulse im Wechsel auf den Sensor aufzubringen und dann einen Mittelwert aus den ermittelten Kontrollwerten K zu bilden.

Das Verfahren ist sehr flexibel, da die Parameter des Verfahrens $U_D$, $\pm \Delta U$, K, $K_L$ sowie $U_{min}$ und $U_{max}$ je nach Anwendungsgebiet und verwendetem Sensor-Typ individuell angepasst werden. Das Verfahren kann daher für die Funktionskontrolle einer Vielzahl von amperometrischen elektro-chemischen Sensoren verwendet werden.

$K_L$ wird in Abhängigkeit der Substanz-Konzentration im Medium und der Temperatur ermittelt, daher ist das Verfahren im Wesentlichen unabhängig von der Zusammensetzung des Mediums und der Konzentration der im Medium gelösten Substanz und ermöglicht auch die Funktionskontrolle von Sensoren, die zur Überwachung von sich beispielsweise im Verlaufe eines Prozesses verändernden Medien eingesetzt werden.

Eine Veränderung des Mediums tritt zum Beispiel ein, wenn Reaktionen ablaufen, bei denen die zu untersuchende Substanz entsteht und/oder abgebaut wird.

Die Polarisations-Spannung $U_S$ wird zunächst um $\Delta U$ auf $U_{-1}$ erniedrigt, wobei es natürlich auch möglich ist, die Anfangs-Polarisations-Spannung $U_S$, zunächst um ein vordefiniertes Spannungs-Inkrement $\Delta U$ auf $U_1$ zu erhöhen und in einem späteren Schritt zu überprüfen, ob die Anfangs-Polarisations-Spannung $U_S$ in die richtige Richtung verändert wurde.

Insbesondere für Prozessüberwachungen bietet es sich an, das Verfahren und die entsprechenden von der Konzentration der gesuchten Substanz im Medium abhängigen Grenzwerte $K_L$ in ein Auswertungsprogramm zu integrieren, welches mit der Auswertungseinheit zusammenwirkt, so dass die Funktionskontrolle automatisch und auch online durchgeführt und die Polarisations-Spannung in vorbestimmten Zeiträumen überprüft und nötigenfalls angepasst werden kann.

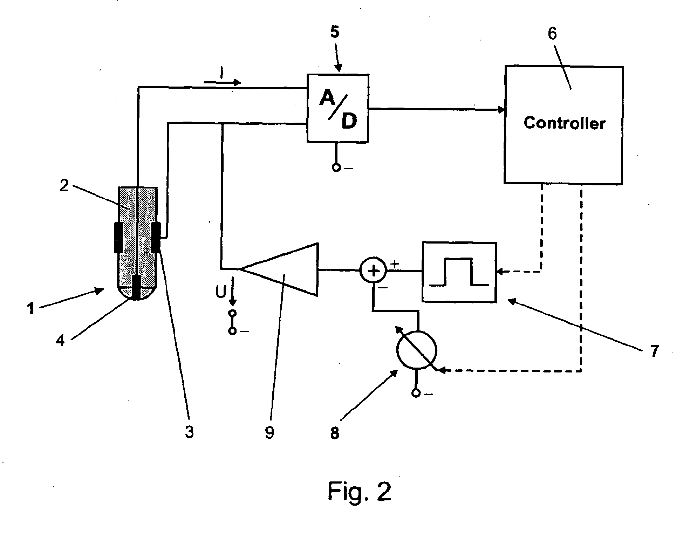

Figur 2 zeigt eine Schaltskizze eines Messsystems zur Durchführung des Verfahrens mit einem Sauerstoff-Sensor. Der Sauerstoff-Sensor 1 ist hier nur schematisch dargestellt. In eine Elektrolytlösung 2 tauchen eine Kathode 4 und eine hier ringförmig ausgestaltete Anode 3 ein, an welcher die Spannung U anliegt. Der Stromkreis des Sensors ist über eine geeignete Messschaltung geschlossen, hier beispielsweise über einen A/D-Wandler 5 für den Strom I. Das Messergebnis steht der Steuer- und Auswertungseinheit 6 zur Verfügung.

Die Steuer- und Auswertungseinheit 6 in die das in Figur 1 beschriebene Verfahren implementiert ist, wertet die Strom-Antwort $I_{-1D}$, $I_{-2D}$, $I_{1D}$, $I_{-n}$, $I_n$ des Sensors aus und steuert einen Störimpuls-Generator 7 sowie eine einstellbare Spannungsquelle 8, mit welcher über den Verstärker 9 die optimale Polarisationsspannung $U_{opt}$ bzw. die Anfangspolarisationsspannung $U_S$ und/oder die geänderte Polarisationsspannung $U_{-1}$, $U_{-2}$, $U_1$, $U_{-n}$, $U_n$ eingestellt wird. Der Störimpuls-Generator 7 kann Störimpulse mit unterschiedlichen Amplituden, Wiederholungsraten und unterschiedlicher Dauer erzeugen. Vorzugsweise hat der Störimpuls die in Figur 2 gezeigte Rechteckform, es können aber auch andere Impulsformen erzeugt werden. Verstärkt ergibt sich daraus der Störimpuls $\pm U_D$, welcher der Polarisationsspannung $U_S$, $U_{-1}$, $U_{-2}$, $U_1$, $U_{-n}$, $U_n$ überlagert ist.

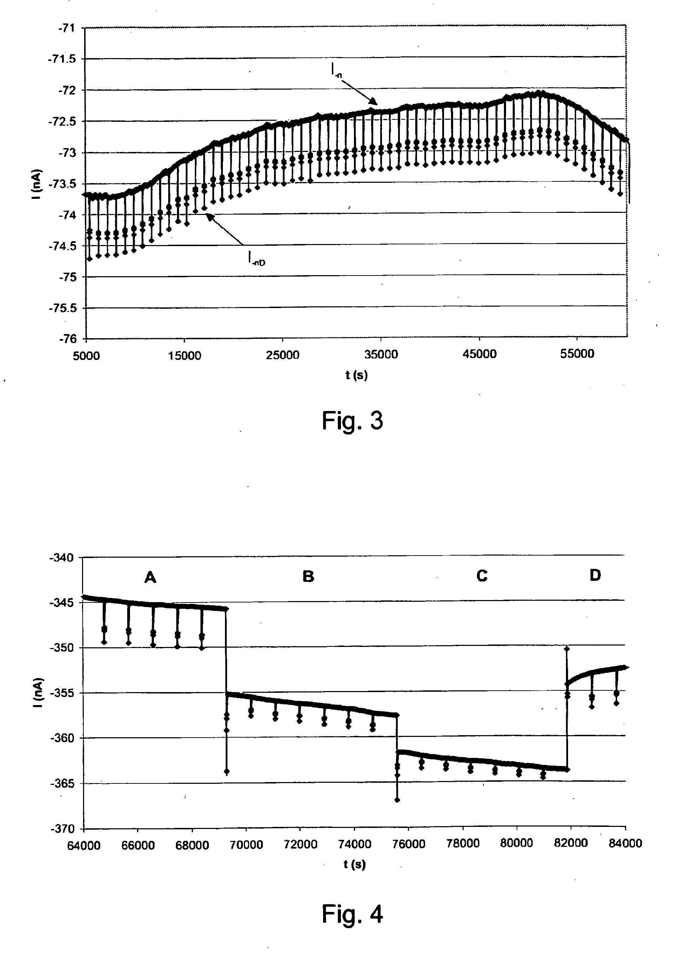

Als Ausführungsbeispiel wird die Anwendung des Verfahrens auf einen amperometrischen elektro-chemischen Sauerstoff-Sensor vom Typ InPro6800 (Mettler-Toledo) anhand der Figuren 3 und 4 für Medien mit unterschiedlichen Zusammensetzungen beschrieben.

Der amperometrische elektro-chemische Sauerstoff-Sensor vom Typ InPro6800 umfasst eine Platin-Kathode, eine Silber/Silberchlorid-Anode und eine bekannte sauerstoffsensitive Membran. Er wird an eine computergestützte Auswertungseinheit angeschlossen und über ein Programm, in welches das in Figur 1 gezeigte Verfahren implementiert ist, kontrolliert.

Sensoren des Typs InPro6800 werden im Allgemeinen mit einer Anfangs-Polarisations-Spannung von -675 mV betrieben, wobei diese Sensoren prinzipiell mit Polarisations-Spannungen zwischen -450 und -900 mV betrieben werden können. Zur Demonstration des Verfahrens zur Funktionsüberprüfung nach Figur 1 wird der Sensor in diesem Ausführungsbeispiel nur mit einer Anfangs-Polarisations-Spannung von $U_S$ = -650 mV betrieben. Als Messmedium wird Luft (21 % Sauerstoff) verwendet,

Figur 3 zeigt ein Diagramm, in dem die Stromstärke I, also das Sensor-Signal, bei einer Polarisations-Spannung von -650 mV im Messmedium Luft in Abhängigkeit der Zeit t dargestellt ist. Das Sensor-Signal wurde alle 3 s über einen Zeitraum von 1000 min (60000 s) bestimmt. Während dieses Zeitraums wurde das Verfahren zur Funktionskontrolle in einem vorbestimmten Zeitmuster durchgeführt. Die Polarisations-Spannung wurde 120 s lang bei -650 mV belassen und dann das System mit einem Störimpuls $\pm U_D$ mit einer Dauer von 12 s und einer Grösse von -25 mV gestört. Als Störimpuls $\pm U_D$ wird ein Rechteckimpuls verwendet. Die Signale des gestörten Systems $I_{-nD}$ sind in Figur 3 als negative Ausschläge oder Spikes mit gleichmässigem zeitlichem Abstand und einer Abweichung von etwa -1 nA im Vergleich zu den Signalen des ungestörten Systems $I_{-n}$ zu erkennen. Die Abstände zwischen den Messwerten sind mit nur 3 s sehr klein, so dass pro Störimpuls etwa vier Messwerte aufgenommen werden.

Das System reagiert auf einen solchen Störimpuls mit einer ebenfalls rechteckförmigen Änderung der Stromstärke. Allerdings ist ein chemisches System träger als ein rein elektronisches. Es reagiert langsamer, was dazu führt, dass eine Änderung der Stromstärke als Antwort auf den Störimpuls erst mit einer gewissen Verzögerung eintritt.

Das Sensor-Signal des ungestörten Systems $I_{-n}$ zeigt einen relativ konstanten Verlauf der Stromstärke mit einer absoluten Abweichung von nur etwa 1,6 nA, bei Stromstärken zwischen etwa -73,7 und -72,1 nA. Die Abweichungen treten auf, da der Sensor nicht temperaturkompensiert betrieben wurde. Anhand der Signale des ungestörten $I_{-n}$ und des gestörten Systems $I_{-nD}$ wird in diesem konkreten Ausführungsbeispiel anhand der folgenden Formel für jeden Störimpuls ein Kontrollwert $K_{-n}$ ermittelt:

$$K_{-n} = \left| \frac{I_{-nD}}{I_{-n}} \cdot 100 \right| \text{ mit } n \geq 1,$$

wobei $I_{-n}$ die Antwort des ungestörten Systems und $I_{-nD}$ die Antwort des gestörten Systems ist. Der Kontrollwert $K_{-n}$ wird dann mit dem system-spezifischen Grenzwert $K_L$ verglichen, welcher für diesen Sensor-Typ in Luft etwa 1 % beträgt. Trotz der erniedrigten Anfangs-Polarisations-Spannung liegt der so ermittelte Kontrollwert für alle Störimpulse unterhalb des Grenzwerts $K_L$. Der Sensor arbeitet unter diesen Bedingungen noch innerhalb der für diesen Sensor-Typ vorgegebenen Messgenauigkeit.

Figur 4 zeigt eine zeitliche Fortsetzung des Diagramms aus Figur 3, allerdings wurde das Messmedium abrupt von Luft zu reinem Sauerstoff geändert. Die in Figur 4 zu erkennenden vier Zeitbereiche A, B, C, D stellen Bereiche mit unterschiedlichen Polarisations-Spannungen dar. Zur Verdeutlichung der Vorgänge wird jede eingestellte Polarisations-Spannung über einen Zeitraum von 5000 s gehalten, während diese Zeitraums wurde die Polarisations-Spannung alle 120 s mit einem 12 s andauernden rechteckförmigen Störimpuls mit einer Grösse von -25 mV gestört und alle 3 s ein Messwert aufgenommen.

Der Wechsel des Mediums wirkt sich, bei Verwendung desselben Sensors und gleicher Polarisations-Spannung, sofort auf das Sensor-Signal aus. Bei einer Anfangs-Polarisations-Spannung von -650 mV zeigt der Sensor in reinem Sauerstoff ein Sensor-Signal, welches sich im Vergleich zu Luft (s. Figur 3) von etwa -73 nA zu etwa -345 nA verändert hat (s. Bereich A). Wird das System durch Störimpulse gestört, so reagiert das System mit einer gewissen zeitlichen Verzögerung auf die Störimpulse und zeigt ebenfalls negative Ausschläge, wie in Figur 4 zu erkennen.

Anhand mindestens eines Messsignals bei der Anfangs-Polarisations-Spannung von -650 mV (s. Bereich A) und mindestens einer Antwort des gestörten Systems wird jeweils der Kontrollwert $K_{-n}$ berechnet, welcher im Mittel mit 0,9 % deutlich über dem Grenzwert $K_L$ für reinen Sauerstoff liegt. Für reinen Sauerstoff sollte $K_L$ einen Wert von 0,3 % oder weniger als 0,3 % haben.

Analog zu dem in Figur 1 gezeigten Verfahren wird die Polarisations-Spannung in Spannungs-Inkrementen von $\Delta U = -100$ mV erniedrigt, das System gestört, ein neuer Kontrollwert $K_{-n}$ anhand der Strom-Antworten des ungestörten und des gestörten Systems ermittelt und dieser mit dem system-spezifischen Grenzwert $K_L$ verglichen.

Die Erniedrigung der Polarisations-Spannung fällt in diesem Ausführungsbeispiel mit dem Aussenden eines Störimpulses zusammen, so dass das Signal des Systems einen im Vergleich zu den Signalen des gestörten Systems bei derselben Polarisations-Spannung stärker abweicht. Durch die abrupte Umstellung der Polarisations-Spannung werden auch die Elektroden-Reaktionen beeinflusst, so dass es einige Zeit dauert bis sich wieder ein Gleichgewicht eingestellt hat.

Der Bereich B zeigt die Messsignale des gestörten und ungestörten Systems bei einer Polarisations-Spannung von -750 mV. Anhand dieser Werte und dem bereits für Luft angegebenen Zusammenhang zwischen den Signalen des ungestörten und des gestörten Systems wurde ein Kontrollwert von 0,3 % ermittelt.

Wird die Polarisations-Spannung nochmals um $\Delta U = -100$ mV auf -850 mV erniedrigt, wie es in Bereich C gezeigt wird, so erniedrigt sich der Kontrollwert nochmals auf 0,2 %.

Für reinen Sauerstoff sollte für diesen Sensor-Typ der Grenzwert bei etwa 0,3 % liegen. Bezogen auf die in Figur 4 dargstellten Ergebnisse bedeutet dies, dass der Sensor sowohl mit einer Polarisations-Spannung von -750 mV als auch mit einer Polarisations-Spannung von -850 mV innerhalb der vorgegebenen Grenzen optimal funktioniert, wobei ein niedrigerer Kontrollwert bevorzugt wird, da dann auch der Messfehler geringer ist.

Zur Kontrolle des Verfahrens wird die Polarisations-Spannung im Anschluss manuell wieder auf -650 mV erhöht (s. Bereich D). Daraufhin steigt die Stromstärke wieder an und auch die ermittelten Kontrollwerte liegen mit 0,7 % deutlich oberhalb des Grenzwertes.

Das vorgestellte Beispiel zeigt die Anwendbarkeit des in Figur 1 schematisch aufgezeigten Verfahrens zur Funktionskontrolle eines amperometrischen elektro-chemischen Sensors.

Das Beispiel bezieht sich auf einen bestimmten Sauerstoff-Sensor-Typ. Das Verfahren kann jedoch analog auch für andere amperometrische elektro-chemische Sensoren herangezogen werden, wobei der Grenzwert $K_L$ und weitere Verfahrensparameter an das Messsystem und das jeweilige Medium angepasst werden müssen.

Das Verfahren zur Funktionskontrolle und Anpassung der Polarisations-Spannung kann auch für Messungen in Medien verwendet werden, welche Störsubstanzen enthalten. Ein Beispiel für eine solche Störsubstanz ist Kohlendioxid. Gelöstes Kohlendioxid erniedrigt den pH-Wert der Elektrolyt-Lösung, so dass bei der Reduktion bereits bei geringeren Polarisations-Spannungen Wasserstoff entstehen kann, welcher das Messresultat verfälscht.

**Bezugszeichenliste**

1   Sauerstoff-Sensor
2   Elektrolytlösung
3   Anode
4   Kathode
5   A/D-Wandler
6   Steuer- und Auswertungseinheit
7   Störimpuls-Generator
8   einstellbare Spannungsquelle
9   Verstärker

**Patentansprüche**

1.  Verfahren zur Funktionskontrolle eines amperometrischen elektro-chemischen Sensors mit einer elektro-chemischen Zelle, welches die folgenden Schritte umfasst:

    a. Anlegen einer konstanten Polarisationsspannung ($U_S$, $U_{-1}$, $U_{-2}$, $U_1$, $U_{-n}$, $U_n$) an die elektro-chemische Zelle, welche zu Beginn eine konstante AnfangsPolarisationsspannung ($U_S$) ist,
    b. Aufbringen einer Störgrösse ($\pm U_D$) auf die elektro-chemische Zelle,
    c. Ermittlung mindestens einer Antwort ($I_{-1D}$, $I_{-2D}$, $I_{1D}$, $I_{-n}$, $I_n$) der so gestörten elektro-chemischen Zelle,
    d. Ermittlung eines Kontrollwerts ($K_D$, $K_{-1}$, $K_2$, $K_1$, $K_{-n}$, $K_n$) unter Einbeziehung der Antwort ($I_{-1D}$, $I_{-2D}$, $I_{1D}$, $I_{-n}$, $I_n$) der so gestörten elektro-chemischen Zelle,
    e. Vergleich des Kontrollwerts ($K_D$, $K_{-1}$, $K_{-2}$, $K_1$, $K_{-n}$, $K_n$) mit einem Grenzwert ($K_L$),
    f. entweder Verifikation der Polarisations-Spannung ($U_S$, $U_{-1}$, $U_{-2}$, $U_1$, $U_{-n}$, $U_n$) als optimale Polarisations-Spannung ($U_{opt}$), wenn der Kontrollwert ($K_D$, $K_{-1}$, $K_{-2}$, $K_1$, $K_{-n}$, $K_n$) kleiner oder gleich dem Grenzwert ($K_L$) ist, oder Veränderung der Polarisations-Spannung ($U_S$, $U_{-1}$, $U_{-2}$, $U_1$, $U_{-n}$, $U_n$) um ein Inkrement ($\Delta U$), wenn der Kontrollwert ($K_D$, $K_{-1}$, $K_{-2}$, $K_1$, $K_{-n}$, $K_n$) grösser als der Grenzwert ($K_L$) ist,
    g. Wiederholung der Schritte a bis f mit der veränderten Polarisations-Spannung ($U_{-1}$, $U_{-2}$, $U_1$, $U_{-n}$, $U_n$).

2.  Verfahren nach Anspruch 1 **dadurch gekennzeichnet, dass** der Sensor während der Funktionskontrolle spannungskontrolliert und temperaturkompensiert betrieben wird.

3.  Verfahren nach einem der Ansprüche 1 oder 2 **dadurch gekennzeichnet, dass** der Kontrollwert ($K_D$, $K_{-1}$, $K_{-2}$, $K_1$, $K_{-n}$, $K_n$) über eine Kontrollfunktion ($K$) berechnet wird, welche system-spezifisch ist und einen mathematischen Zusammenhang zwischen einer Antwort ($I_{-1D}$, $I_{-2D}$, $I_{1D}$, $I_{-nD}$, $I_{nD}$) der gestörten elektro-chemischen Zelle und einer Antwort ($I_S$, $I_{-1}$, $I_{-2}$, $I_1$, $I_{-n}$, $I_n$) der ungestörten elektro-chemischen Zelle herstellt.

4.  Verfahren nach Anspruch 3 **dadurch gekennzeichnet, dass** die Kontrollfunktion vor dem Aufbringen der Störgrösse ($\pm U_D$) empirisch bestimmt wird und in einer Auswertungseinheit abgespeichert wird.

5.  Verfahren nach einem der Ansprüche 1 bis 4 **dadurch gekennzeichnet, dass** die Störgrösse ($\pm U_D$) ein rechteckförmiger, dreieckförmiger, sinusförmiger oder gaussförmiger Spannungs-Impuls ist.

6.  Verfahren nach Anspruch 5 **dadurch gekennzeichnet, dass** der Spannungsimpuls jeweils während einer Dauer von 1 bis 60 s mit einem Höchstwert von 1 bis 100 mV auf das System einwirkt.

7.  Verfahren nach einem der Ansprüche 1 bis 6 **dadurch gekennzeichnet, dass** das Inkrement ($\Delta U$) einen Wert zwischen 5 und 1000 mV, vorzugsweise einen Wert zwischen 10 und 150 mV aufweist.

8.  Verfahren nach einem der Ansprüche 1 bis 7, **dadurch gekennzeichnet, dass** das Verfahren automatisch durchgeführt wird.

9.  Messsystem zur Durchführung des Verfahrens nach einem der Ansprüche 1 bis 8 mindestens umfassend, einen amperometrischen elektro-chemischen Sensor, welcher eine elektro-chemische Zelle mit mindestens einer Arbeitselektrode und einer Gegenelektrode aufweist, eine veränderbare Spannungsquelle, eine Strommesseinrichtung und eine computergestützte Steuer- und Auswertungseinheit in die das Verfahren nach Anspruch 1 implementiert ist.

10. Messsystem nach Anspruch 9, **dadurch gekennzeichnet, dass** die computergestützte Auswertungseinheit einen Datenspeicher umfasst, in dem für verschiedener Substanz-Konzentrationen und unterschiedliche Sensoren die Werte für die vorbestimmten Inkremente ($\Delta U$), die Grenzwerte ($K_L$), die Störimpulse ($\pm U_D$) und die Anfangs-Polarisations-Spannung ($U_S$) sowie die Kontrollfunktionen ($K$) abgelegt sind.

**Claims**

1. Method of checking the function of an amperometric electrochemical sensor with an electrochemical cell, comprising the steps:

   a. applying a constant polarization voltage ($U_S$, $U_{-1}$, $U_{-2}$, $U_1$, $U_{-n}$, $U_n$) to the electrochemical cell, said constant polarization voltage being at the beginning a constant initial polarization voltage ($U_S$),
   b. applying a perturbation quantity ($\pm U_D$) to the electrochemical cell,
   c. determining at least one response ($I_{-1D}$, $I_{-2D}$, $I_{1D}$, $I_{-n}$, $I_n$) of the electrochemical cell in the presence of said perturbation,
   d. determining a check value ($K_D$, $K_{-1}$, $K_{-2}$, $K_1$, $K_{-n}$, $K_n$) by using said response ($L_{-1D}$, $I_{-2D}$, $I_{1D}$, $I_{-n}$, $I_n$) of the electrochemical cell in the presence of said perturbation as an input in said determination,
   e. comparing the check value ($K_D$, $K_{-1}$, $K_{-2}$, $K_1$, $K_{-n}$, $K_n$) to a limit value ($K_L$),
   f. confirming the polarization voltage ($U_S$, $U_{-1}$, $U_{-2}$, $U_1$, $U_{-n}$, $U_n$) as optimal polarization voltage ($U_{opt}$) if the the check value ($K_D$, $K_{-1}$, $K_{-2}$, $K_1$, $K_{-n}$, $K_n$) is smaller than or equal to the limit value ($K_L$), or changing the polarization voltage ($U_S$, $U_{-1}$, $U_{-2}$, $U_1$, $U_{-n}$, $U_n$) by one increment ($\Delta U$), if the check value ($K_D$, $K_{-1}$, $K_{-2}$, $K_1$, $K_{-n}$, $K_n$) is larger than the limit value ($K_L$),
   g. repeating the steps a through f with the changed polarization voltage ($U_{-1}$, $U_{-2}$, $U_1$, $U_{-n}$, $U_n$).

2. Method according to claim 1, **characterized in that** during the function check the sensor is operated with voltage control and temperature compensation.

3. Method according to one of the claims 1 or 2, **characterized in that** the check value ($K_D$, $K_{-1}$, $K_{-2}$, $K_1$, $K_{-n}$, $K_n$) is calculated through a check function ($K$) which is system-specific and establishes a mathematical relationship between a response ($I_{-1D}$, $I_{-2D}$, $I_{1D}$, $I_{-n}$, $I_n$) of the electrochemical cell in the presence of said perturbation and a response ($I_S$, $I_{-1D}$, $I_{-2D}$, $I_{1D}$, $I_{-n}$, $I_n$) of the electrochemical cell without the perturbation.

4. Method according to claim 3, **characterized in that** the check function is determined empirically prior to applying the perturbation quantity ($\pm U_D$) and stored in a processing unit.

5. Method according to one of the claims 1 to 4, **characterized in that** the perturbation quantity ($\pm U_D$) is a rectangular, triangular, sinusoidal or Gaussian voltage pulse.

6. Method according to claim 5, **characterized in that** the voltage pulse in each case is effective in the system for a duration of 1 to 60 seconds with a maximum value of 100 mV.

7. Method according to one of the claims 1 to 6, **characterized in that** the increment ($\Delta U$) has a value between 5 and 1000 mV, preferable a value between 10 and 150 mV.

8. Method according to one of the claims 1 to 7, **characterized in that** the method is performed automatically.

9. Measuring system for performing the method according to one of the claims 1 to 8, comprising an amperometric electrochemical sensor which has an electrochemical cell with at least one working electrode and a counterelectrode, a variably settable voltage source, a current-measuring device, and a computer-supported control- and processing unit in which the method according to claim 1 is implemented.

10. Measuring system according to claim 9, **characterized in that** the computer-supported processing unit comprises a data memory in which the values for the predetermined increments ($\Delta U$), the limit values ($K_L$), the perturbation pulses ($\pm U_D$) and the initial polarization voltage ($U_S$) as well as the check function ($K$) are stored for different substance concentrations and different sensors.

**Revendications**

1.  Procédé pour le contrôle de fonction d'un capteur électrochimique ampérométrique avec une cellule électrochimique, qui comprend les étapes suivantes :

    a. Application d'une tension de polarisation constante ($U_s$, $U_{-1}$, $U_{-2}$, $U_1$, $U_{-n}$, $U_n$) sur la cellule électrochimique, qui est au début une tension de polarisation initiale ($U_s$) constante,
    b. Application d'une grandeur perturbatrice ($\pm U_D$) sur la cellule électrochimique,
    c. Détermination d'au moins une réponse ($I_{-1D}$, $I_{-2D}$, $I_{1D}$, $I_{-n}$, $I_n$) de la cellule électrochimique ainsi perturbée,
    d. Détermination d'une valeur de contrôle ($K_D$, $K_{-1}$, $K_{-2}$, $K_1$, $K_{-n}$, $K_n$) en consideration de la réponse ($I_{-1D}$, $I_{-2D}$, $I_{1D}$, $I_{-n}$, $I_n$) de la cellule électrochimique ainsi perturbée,
    e. Comparaison de la valeur de contrôle ($K_D$, $K_{-1}$, $K_{-2}$, $K_1$, $K_{-n}$, $K_n$) avec une valeur limite ($K_L$),
    f. Soit vérification de la tension de polarisation ($U_s$, $U_{-1}$, $U_{-2}$, $U_1$, $U_{-n}$, $U_n$) comme tension de polarisation optimale ($U_{opt}$), lorsque la valeur de contrôle ($K_D$, $K_{-1}$, $K_{-2}$, $K_1$, $K_{-n}$, $K_n$) est inférieure ou égale à la valeur ($K_L$), soit variation de la tension de polarisation ($U_s$, $U_{-1}$, $U_{-2}$, $U_1$, $U_{-n}$, $U_n$) d'un incrément ($\Delta U$) lorsque la valeur de contrôle ($K_D$, $K_{-1}$, $K_{-2}$, $K_1$, $K_{-n}$, $K_n$) est supérieure à la valeur limite ($K_L$),
    g. Répétition des étapes a jusqu'à f avec la tension de polarisation modifiée ($U_{-1}$, $U_{-2}$, $U_1$, $U_{-n}$, $U_n$).

2.  Procédé selon la revendication 1, **caractérisé en ce que** le capteur est exploité pendant le contrôle de fonction de façon contrôlée au niveau de la tension et compensé au niveau de la température.

3.  Procédé selon l'une quelconque des revendications 1 ou 2, **caractérisé en ce que** la valeur de contrôle ($K_D$, $K_{-1}$, $K_{-2}$, $K_1$, $K_{-n}$, $K_n$) est calculée par une fonction de contrôle ($K$), qui est spécifique au système et établit une corrélation mathématique entre une réponse ($I_{-1D}$, $I_{-2D}$, $I_{1D}$, $I_{-n}$, $I_n$) de la cellule électrochimique perturbée et une réponse ($I_s$, $I_{-1}$, $I_{-2}$, $I_1$, $I_{-n}$, $I_n$) de la cellule électrochimique non perturbée.

4.  Procédé selon la revendication 3, **caractérisé en ce que** la fonction de contrôle est déterminée de façon empirique avant l'application de la grandeur perturbatrice ($\pm U_D$) et mémorisée dans une unité d'analyse.

5.  Procédé selon l'une quelconque des revendications 1 à 4, **caractérisé en ce que** la grandeur perturbatrice ($\pm U_D$) est une impulsion de tension de forme rectangulaire, triangulaire, sinusoïdale ou gaussienne.

6.  Procédé selon la revendication 5, **caractérisé en ce que** l'impulsion de tension agit à chaque fois pendant une durée de 1 à 60 s avec une valeur maximale de 1 à 100 mV sur le système.

7.  Procédé selon l'une quelconque des revendications 1 à 6, **caractérisé en ce que** l'incrément ($\Delta U$) précise une valeur comprise entre 5 et 1000 mV, de préférence une valeur comprise entre 10 et 150 mV.

8.  Procédé selon l'une quelconque des revendications 1 à 7, **caractérisé en ce que** le procédé est appliqué automatiquement.

9.  Système de mesure pour la mise en oeuvre du procédé selon l'une quelconque des revendications 1 à 8, comprenant au moins un capteur électrochimique ampérométrique, qui présente une cellule électrochimique avec au moins une électrode de travail et une contre-électrode, une source de tension modifiable, un dispositif de mesure de courant et une unité de commande et d'analyse assistée par ordinateur dans lequel le procédé est mis en place selon la revendication 1.

10. Système de mesure selon la revendication 9, **caractérisé en ce que** l'unité d'analyse assistée par ordinateur comporte une mémoire de données dans laquelle, pour différentes concentrations de substance et différents capteurs, les valeurs pour les incréments ($\Delta U$) prédéfinis, les valeurs limites ($K_L$), les impulsions perturbatrice ($\pm U_D$) et la tension de polarisation initiale ($U_S$) ainsi que les fonctions de contrôle ($K$) sont déposées.

$U_S$

$I_S$

$\pm U_D$

$I_D$

$K_D = |K(I_D, I_S)|$

$K_D \leq K_L$ — **yes** → $U_{opt} := U_S$

**no**

$U_{-1} := U_S - \Delta U$

$I_{-1}$

$\pm U_D$

$I_{-1D}$

$K_{-1} = |K(I_{-1D}, I_{-1})|$

$K_{-1} \leq K_L$ — **yes** → $U_{opt} := U_{-1}$

**no**

( 1 )

$U_S := U_{opt}$ - - - - - ( 4 )

## Fig. 1 (Teil 1)

Fig. 1 (Teil 2)

Fig. 1 (Teil 3)

Fig. 2

Fig. 3

Fig. 4

**EP 1 707 954 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10244084 A1
- US 6761817 B2

18